# EUROPÄISCHE PATENTSCHRIFT

(11) **EP 1 271 017 B1**
(45) Veröffentlichungstag und Bekanntmachung des Hinweises auf die Patenterteilung: **10.11.2004**
(21) Anmeldenummer: 02008786.2
(22) Anmeldetag: 19.04.2002
(51) Int. Cl.: F16J 15/08

(54) **Flachdichtung**
Gasket
Joint plat

(30) Priorität: 22.06.2001 DE 10130326
(43) Veröffentlichungstag der Anmeldung: 02.01.2003
(73) Patentinhaber: Federal-Mogul Sealing Systems GmbH, 57562 Herdorf (DE)
(72) Erfinder: Schmitt, Klaus, Dipl.-Ing., 57529 Grünebach (DE)

(56) Entgegenhaltungen:
- EP-A- 0 606 567
- US-A- 5 560 623
- US-A- 6 076 833
- PATENT ABSTRACTS OF JAPAN vol. 017, no. 201 (M-1399), 20. April 1993 (1993-04-20) & JP 04 347065 A (JAPAN METAL GASKET CO LTD), 2. Dezember 1992 (1992-12-02)
- PATENT ABSTRACTS OF JAPAN vol. 016, no. 484 (M-1322), 7. Oktober 1992 (1992-10-07) & JP 04 175579 A (TOYOTA MOTOR CORP), 23. Juni 1992 (1992-06-23)

## Beschreibung

Die Erfindung betrifft eine Flachdichtung, insbesondere Zylinderkopfdichtung für Verbrennungskraftmaschinen, mit mindestens einer mit mehreren Durchgangsöffnungen versehenen Funktionslage, die im Bereich der Durchgangsöffnungen jeweils mit mindestens einer Sicke versehen und in diesen Bereichen mit mindestens einem Stopperelement durch Schweißen verbunden ist.

Eine derartige Dichtung kann der beispielsweise dem Dokument JP-A-04 347 065 entnommen werden

Der DE-A 199 34 822 ist eine metallische Zylinderkopfdichtung zu entnehmen, mit einer Grundplatte aus Metall, mit mindestens einer Brennkammeröffnung und mit einer ringförmigen Auflage aus Metall, die um die Brennkammer herum angeordnet und mit der Grundplatte verschweißt ist, wobei eine Vielzahl von Schweißpunkten hinter- oder nebeneinander angeordnet sind und die Schweißpunkte so ausgebildet sind, dass an einer Oberfläche der Grundplatte ein vorgebbarer Schweißpunktdurchmesser ausgebildet ist, der kleiner ist als ein weiterer Schweißpunktdurchmesser an einer Oberfläche der Auflage. Die metallische Auflage liegt hierbei radial vor der Sicke (brennkammerseitig), so dass die Schweißnaht im radial innenliegenden Bereich der Durchgangsöffnung vorgesehen ist.

Die US-A 6,027,124 betrifft eine Metallflachdichtung, die ebenfalls aus einer Grundplatte besteht und in Wirkverbindung mit einer metallischen Auflage steht. Die Grundplatte beinhaltet mindestens eine Sicke, die auf der Auflage aufliegen kann. Die Verbindung von Grundplatte und Auflage kann einerseits dadurch erfolgen, dass im Bereich der Durchgangsöffnung, das heißt radial vor der Sicke, eine umlaufende Schweißnaht aufgebracht wird. Andererseits besteht die Möglichkeit, die Auflage radial vor und radial hinter der Sicke durch umlaufende Schweißnähte mit der Grundplatte zu verbinden.

Bei bestimmten Zylinderkopfprofilen, insbesondere solchen mit eng nebeneinander liegenden Durchgangsöffnungen, bei denen die Sicke auf dem Stopperelement liegt, ist eine Befestigung desselben radial vor der Sicke problematisch, da im Verlauf der Montage des Zylinderkopfes auf dem Motorblock Scherspannungen im Stegbereich der Dichtung an der Befestigungsstelle zwischen dem Stopperelement und der Funktionslage auftreten. Hier kann es geschehen, dass die Befestigungsstelle entweder zerstört oder beschädigt wird.

Der Erfindung liegt die Aufgabe zugrunde, eine im gattungsbildenden Teil des ersten Patentanspruches beschriebene Flachdichtung, insbesondere Zylinderkopfdichtung für Verbrennungskraftmaschinen, dahingehend weiterzubilden, dass Beschädigungen bzw. Zerstörungen im Bereich der Befestigungsstelle zwischen dem Stopperelement und der Funktionslage vermieden werden.

Diese Aufgabe wird dadurch gelöst, dass das Stopperelement nach Art einer zusammenhängenden Brille ausgebildet und - bezogen auf die jeweilige Durchgangsöffnung - radial hinter der Sicke durch Schweißen mit der Funktionslage verbunden ist.

Sinnvolle Weiterbildungen des Erfindungsgegenstandes sind den Unteransprüchen zu entnehmen.

Vorteilhafterweise ist das Stopperelement unterhalb der Sicke angeordnet, so dass bei der Montage des Zylinderkopfes auf den Motorblock keine Scherspannungen im Stegbereich der Flachdichtung an der jeweiligen Befestigungsstelle zwischen Stopperelement und Funktionslage auftreten können.

Vorzugsweise erfolgt die Befestigung des Stopperelementes auf der Funktionslage durch Punktschweißen, insbesondere durch Laserpunktschweißen.

Die Flachdichtung kann ein- oder mehrlagig ausgebildet sein, wobei die Anordnung der Sicke auf dem Stopperelement auch bei Flachdichtungen, insbesondere Zylinderkopfdichtungen, möglich ist, bei denen nur gesickte Funktionslagen eingesetzt werden.

Der Erfindungsgegenstand ist anhand eines Ausführungsbeispieles in der Zeichnung dargestellt und wird wie folgt beschrieben. Es zeigen:
- Figur 1: Prinzipskizze einer Zylinderkopfdichtung für Verbrennungskraftmaschinen;
- Figur 2: Schnitt gemäß Linie A-A der Figur 1.

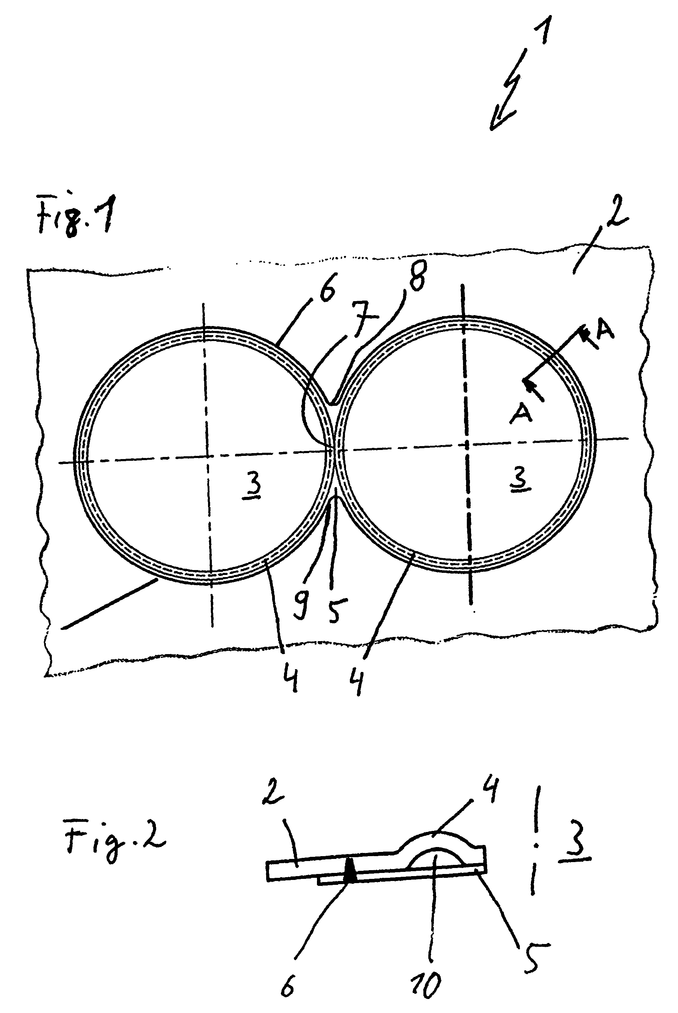

Figur 1 zeigt als Prinzipskizze eine Zylinderkopfdichtung 1, beinhaltend eine Funktionslage 2, in welcher mehrere nebeneinander liegende Durchgangsöffnungen 3 eingebracht sind. Die Funktionslage 2 ist im Bereich der Durchgangsöffnungen 3 mit einer umlaufenden Sicke 4 versehen, wobei unterhalb der Sicke ein nach Art einer zusammenhängenden Brille ausgebildetes Stopperelement 5 positioniert ist, das - bezogen auf die jeweilige Durchgangsöffnung 3 - radial hinter der Sicke 4 durch eine Schweißnaht 6 mit der Funktionslage 2 verbunden ist. Die Schweißnaht 6 ist hierbei durch Laserschweißen (Laserpunktschweißen) in Analogie zur DE-A 199 34 822 erzeugt. In diesem Beispiel sind die Durchgangsöffnungen über einen verhältnismäßig schmalen Steg 7 voneinander beabstandet, so dass die Schweißnaht 6 unter Bildung von einander gegenüberliegenden Bögen 8,9 jeweils radial hinter den Sicken 4 ineinander übergeht.

Figur 2 zeigt einen Schnitt gemäß Linie A-A der Figur 1. Erkennbar ist die Funktionslage 2, das Stopperelement 5, die Sicke 4 sowie die angedeutete Durchgangsöffnung 3. Die Sicke 4 ist unter Bildung eines Hohlraumes 10 auf dem Stopperelement 5 aufgelegt, wobei die Schweißnaht 6 - bezogen auf die Durchgangsöffnung 3 - radial hinter der Sicke 4 vorgesehen ist.

## Patentansprüche

1. Flachdichtung, insbesondere Zylinderkopfdichtung (1) für Verbrennungskraftmaschinen, mit mindestens einer mit mehreren Durchgangsöffnungen (3) versehenen Funktionslage (2), die im Bereich der Durchgangsöffnungen (3) jeweils mit mindestens einer Sicke (4) versehen und in diesen Bereichen mit mindestens einem Stopperelement (5) durch Schweißen verbunden ist, **dadurch gekennzeichnet, dass** das Stopperelement (5) nach Art einer zusammenhängenden Brille ausgebildet und - bezogen auf die jeweiligen Durchgangsöffnungen (3) - radial hinter der Sicke (4) durch Schweißen mit der Funktionslage (2) verbunden ist.

2. Flachdichtung nach Anspruch 1, **dadurch gekennzeichnet, dass** das Stopperelement (5) unterhalb der Sicke (4), insbesondere im planen Bereich der Funktionslage (2), angeordnet ist.

3. Flachdichtung nach Anspruch 1 oder 2, **dadurch gekennzeichnet, dass** das Stopperelement (5) durch Punktschweißen (6) mit der Funktionslage (2) verbunden ist.

4. Flachdichtung nach einem der Ansprüche 1 bis 3, **dadurch gekennzeichnet, dass** das Stopperelement (5) durch Laserpunktschweißen (6) mit der Funktionslage (2) verbunden ist.

5. Flachdichtung nach einem der Ansprüche 1 bis 4, **dadurch gekennzeichnet, dass** die Schweißnaht (6) im Bereich einer der Durchgangsöffnungen (3) unter Bildung von einander gegenüberliegenden Übergangsbögen (8,9) in den Bereich der daneben vorgesehenen Durchgangsöffnung (3) einläuft.

## Claims

1. Flat gasket, in particular cylinder head gasket (1) for internal combustion engines, having at least one functional layer (2), which is provided with a plurality of through-openings (3), said layer being provided with at least one bead (4) in the region of the through-openings (3) respectively and being connected in these regions to at least one stopper element (5) by welding, **characterised in that** the stopper element (5) is configured in the manner of joined spectacles and being connected - relative to the respective through-openings (3) - to the functional layer (2) radially behind the bead (4) by means of welding.

2. Flat gasket according to claim 1, **characterised in that** the stopper element (5) is disposed under the bead (4), in particular in the planar region of the functional layer (2).

3. Flat gasket according to claim 1 or 2, **characterised in that** the stopper element (5) is connected to the functional layer (2) by spot welding (6).

4. Flat gasket according to one of the claims 1 to 3, **characterised in that** the stopper element (5) is connected to the functional layer (2) by laser spot welding (6).

5. Flat gasket according to one of the claims 1 to 4, **characterised in that** the weld seam (6) in the region of one of the through-openings (3) extends into the region of the adjacently provided through-opening (3), forming oppositely situated transitional arcs (8, 9).

## Revendications

1. Joint d'étanchéité plat, en particulier joint de culasse de cylindre (1) pour un moteur à combustion interne, comprenant au moins une couche de fonction (2) pourvue de plusieurs ouvertures de passage (3), ladite couche de fonction (2) étant pourvue dans la zone des ouvertures de passage (3) respectivement d'au moins une moulure (4) et étant reliée par soudage dans cette zone avec au moins un élément de butée, **caractérisé en ce que** l'élément de butée (5) est réalisé sous la forme de lunettes raccordées et est relié - par rapport aux ouvertures de passage respectives (3) - radialement derrière la moulure (4) par soudage avec la couche de fonction (2).

2. Joint plat selon la revendication 1, **caractérisé en ce que** l'élément de butée (5) est disposé en dessous de la moulure (4), en particulier dans une zone plane de la couche de fonction (2).

3. Joint plat selon la revendication 1 ou 2, **caractérisé en ce que** l'élément de butée (5) est relié par soudage ponctuel (6) à la couche de fonction (2).

4. Joint plat selon l'une des revendications 1 à 3, **caractérisé en ce que** l'élément de butée (5) est relié par soudage ponctuel au laser à la couche de fonction (2).

5. Joint plat selon l'une des revendications 1 à 4, **caractérisé en ce que** la ligne de soudure (6) pénètre dans la zone d'une des ouvertures de passage (3) en formant des coudes de transition opposés (8, 9) dans la zone de l'ouverture de passage adjacente (3).
